# EUROPÄISCHE PATENTSCHRIFT

(11) **EP 3 265 669 B1**
(45) Veröffentlichungstag und Bekanntmachung des Hinweises auf die Patenterteilung: **10.04.2019**
(21) Anmeldenummer: 16704554.1
(22) Anmeldetag: 05.02.2016
(51) Int. Cl.: F03B 3/16, F03B 3/12, F03B 3/02, F03B 3/06, F03B 3/18

(54) **VERFAHREN ZUR MONTAGE EINES LEITAPPARATES**
METHOD FOR MOUNTING A GUIDE APPARATUS
PROCÉDÉ DE MONTAGE D'UN DISPOSITIF DE GUIDAGE

(30) Priorität: 02.03.2015 DE 102015203630
(43) Veröffentlichungstag der Anmeldung: 10.01.2018
(73) Patentinhaber: Voith Patent GmbH, 89522 Heidenheim (DE)
(72) Erfinder: SALCHER, Gebhard, 89522 Heidenheim (DE)
(86) Internationale Anmeldenummer: PCT/EP2016/052471
(87) Internationale Veröffentlichungsnummer: WO 2016/139026

(56) Entgegenhaltungen:
- EP-A1- 0 561 619
- DE-A1-102012 018 066
- JP-A- S55 160 171
- JP-A- S58 176 476
- JP-A- 2006 348 960

## Beschreibung

Die Erfindung betrifft ein Verfahren zur Montage eines Leitapparates einer großen hydraulischen Maschine mit vertikaler Drehachse, wobei die Achsen der Leitschaufeln parallel zur Drehachse, d.h. ebenfalls vertikal verlaufen. Bei der hydraulischen Maschine kann es sich um eine Turbine vom Typ Francis oder Kaplan handeln. Auch Propeller-Turbinen können mit einem solchen Leitapparat ausgestattet sein. Ferner fallen auch Pumpen und Pump-Turbinen in den Geltungsbereich der vorliegenden Schrift. Zur Illustration der von der Erfindung betroffenen Leitapparate wird beispielhaft auf die Schriften US-1688736 (in Verbindung mit einer Francis-Turbine) und US-2077883 (in Verbindung mit einer Kaplan-Turbine) verwiesen.

Das Verfahren zur Montage eines solchen Leitapparates gemäß dem Stand der Technik umfasst folgende Schritte in der genannten Reihenfolge: Bereitstellung des Krafthauses mit Maschinenschacht und mit den Befestigungsstellen für den Einbau des Leitapparates, Einbau des unteren Leitradringes, sukzessiver Einbau der Leitschaufeln in den unteren Leitradring, Einbau des Laufrades, Einbau des oberen Leitradringes bzw. des Turbinendeckels, Montage der Regelmechanik. Im Einzelfall werden die genannten Schritte in unterschiedlicher Reihenfolge ausgeführt. Wesentlich für das Verständnis der vorliegenden Erfindung ist, dass gemäß dem Stand der Technik der Aufbau des Leitapparates von unten nach oben (d.h. beginnend mit dem unteren Leitradring werden die einzelnen Leitschaufeln sukzessive in diesen eingebaut) und im Maschinenschacht erfolgt.

Das Verfahren gemäß dem Stand der Technik weist folgende Nachteile auf: Für alle in den genannten Verfahrensschritten benötigten Hebearbeiten wird der Krafthauskran benötigt, welcher die einzige Hebevorrichtung ist, die im Maschinenschacht eingesetzt werden kann. Darunter schlagen vor allem das Holen (z.B. vom Lager oder Anlieferungsort) und das Einheben der einzelnen Leitschaufeln besonders zu Buche, da ein Leitapparat aus einer Vielzahl von Leitschaufeln aufgebaut ist. Auf diese Weise wird der Krafthauskran für eine lange Zeit blockiert und kann nicht für andere ebenfalls notwendige Hebearbeiten verwendet werden. Dadurch ergeben sich erhebliche Wartezeiten, die die Installation des Kraftwerks insgesamt verzögern.

Für Leitapparate mit Leitschaufeln, deren Drehachse zur Drehachse der Turbine geneigt sind, ist ein anderes Verfahren zur Montage bekannt (vgl. DE 10 2012 018 066 A1). Hierbei wird zunächst eine Baugruppe erstellt, die den oberen Leitradring bzw. den Turbinendeckel und alle Leitschaufeln des Leitapparates umfasst, wobei der Zusammenbau nicht im Maschinenschacht stattfindet und die Leitschaufeln hängend montiert werden. Nach dem Einbau des unteren Leitradringes in den Maschinenschacht wird die vormontierte Baugruppe aus Leitradring/Turbinendeckel und Leitschaufeln durch kontinuierliches Absenken in den Maschinenschacht eingebaut.

Da ein Leitapparat in der Regel eine große Zahl von Leitschaufeln umfasst, welche auf einem großen Durchmesser verteilt angeordnet sind, stellt das Absenken der genannten Baugruppe und Einfädeln der Leitschaufeln in die vorgesehenen Öffnungen im unteren Leitradring eine nicht unerhebliche Herausforderung dar, und erfordert in der Regel sehr viel Zeit und/oder aufwändige Zentrierungsvorrichtungen.

Der Erfinder hat sich die Aufgabe gestellt, ein Verfahren zur Montage eines Leitapparates anzugeben, das die genannten Nachteile vermeidet und somit eine Verkürzung bzw. Vereinfachung der Installationszeit des Kraftwerkes ermöglicht.

Erfindungsgemäß wird diese Aufgabe durch ein Verfahren mit den Merkmalen des Anspruchs 1 gelöst. Weitere vorteilhafte Ausgestaltungen des erfindungsgemäßen Verfahrens ergeben sich aus den hiervon abhängigen Unteransprüchen.

Der Erfinder hat sich von dem Gedanken leiten lassen, dass der Krafthauskran für möglichst wenige Hebearbeiten beim Aufbau des Leitapparates benutzt werden soll. Dies erreicht er dadurch, dass der Leitapparat zunächst zu einer Baugruppe zusammengesetzt wird, welche wenigstens den oberen Leitradring bzw. den Turbinendeckel und alle Leitschaufeln umfasst. Optional kann auch gleich die Regelmechanik des Leitapparates hinzugefügt werden. Dieser Zusammenbau wird außerhalb des Maschinenschachtes durchgeführt und kann z.B. auf einem Vormontageplatz erfolgen. Hierzu wird der obere Leitradring bzw. der Turbinendeckel auf Lastböcke gesetzt, welche in der Höhe ausreichend sind um die Leitschaufeln von unten einbringen zu können. Anschließend kann die Regelmechanik montiert werden. Bei allen diesen Montageschritten mit Ausnahme des ersten Schrittes (Aufbocken des oberen Leitradringes bzw. des Turbinendeckels) wird der Krafthauskran nicht benötigt, da hierfür andere am Vormontageplatz vorhandene Hubeinrichtungen zur Verfügung stehen. Im Maschinenschacht kann hingegen nur der Krafthauskran eingesetzt werden.

Nachdem der untere Leitradring im Maschinenschacht eingebaut worden ist und ggf. auch das Turbinenlaufrad, wird die vormontierte Baugruppe mit dem Krafthauskran zum Maschinenschacht transportiert, oberhalb des unteren Leitradringes positioniert und ausgerichtet und schließlich abgesenkt. Dabei müssen die einzelnen Leitschaufeln mit ihren unteren Zapfen in die zugehörigen Öffnungen des unteren Leitradringes eingefädelt werden. Dieser Vorgang birgt einige technische Schwierigkeiten, da bereits kleine Abweichungen (im Rahmen der normalen Fertigungstoleranzen) von der idealen Anordnung der Leitschaufeln es nahezu unmöglich machen alle Leitschaufelzapfen simultan in die zugehörigen Öffnungen des unteren Leitradringes einzufädeln. Erfindungsgemäß wird dieses Problem folgendermaßen gelöst: Bevor die Baugruppe zum Einbau in den Maschinenschacht aufgenommen wird, werden die im oberen Leitradring bzw. im Turbinendeckel hängenden Leitschaufeln so tiefergesetzt, dass die Unterkante der unteren Leitschaufelzapfen jeweils auf eine unterschiedliche Höhe zu liegen kommt. Dabei bezieht sich die Bezeichnung Höhe auf die Lage in Richtung der Leitschaufelachsen (welche im eingebauten Zustand alle parallel zur Turbinendrehachse verlaufen) und relativ zum oberen Leitradring bzw. zum Turbinendeckel. Die Unterkanten der Leitschaufelzapfen liegen somit dann auf jeweils unterschiedlichen Höhen, wenn jede gedachte Ebene senkrecht zu den Leitschaufelachsen, welche durch eine Unterkante eines Leitschaufelzapfens verläuft, genau diese eine Unterkante berührt und keine weitere Unterkante eines anderen Leitschaufelzapfens.

Das beschriebene Tiefersetzen der Leitschaufeln kann z.B. durch geeignete Spindeln erfolgen, die eine axiale Verstellung der Leitschaufeln zulassen. Es ist klar, dass der Einbau der Leitschaufeln in die Baugruppe und das Tiefersetzen derselben genauso gut in einem Schritt erfolgen kann.

Wird nun die Baugruppe über dem unteren Leitradring abgesenkt, so muss zunächst nur ein, nämlich der tiefste Leitschaufelzapfen in die vorgesehene Öffnung des Leitradrings eingeführt werden. Bei weiterem Absenken werden die übrigen Leitschaufelzapfen sukzessive eingeführt, wobei die bereits eingeführten Zapfen für eine zunehmend bessere Führung der gesamten Baugruppe sorgen. Auf diese Weise wird zu einem Zeitpunkt nur immer ein Zapfen eingeführt, was den Einbau der Baugruppe wesentlich erleichtert.

Natürlich können auch zusätzlich Einführhilfen (z.B. zweiteilige Ringe mit Einführschräge) zum besseren Einfädeln benutzt werden.

In der Praxis hat sich herausgestellt, dass das Verfahren auch dann gut funktioniert, wenn immer zwei oder drei oder vier Leitschaufelzapfen auf der gleichen Höhe zu liegen kommen. D.h. in diesem Fall müssen immer zwei bzw. drei bzw. vier Zapfen beim Absenken der Baugruppe gleichzeitig eingefädelt werden. Besonders gut funktioniert das, wenn die auf gleicher Höhe liegenden Zapfen möglichst weit voneinander entfernt sind, da auf diese Weise bereits nach dem Einfädeln der ersten Gruppe, der auf gleicher Höhe liegenden Zapfen, eine sehr gute Führung für das weitere Einfädeln erzielt wird. Bei Verwendung von Zweiergruppen sollte die Zapfen, die auf gleicher Höhe liegen, also immer gegenüber voneinander gewählt werden, bei Dreiergruppen in einer Anordnung, die ein annähernd gleichseitiges Dreieck bildet und bei Vierergruppen eine kreuzförmige bzw. annähernd quadratische Anordnung. Falls die Anzahl der Leitschaufeln eine restlose Aufteilung in die gewünschten Gruppen nicht zulässt, können die restlichen Leitschaufeln ganz zum Schluss in beliebiger Anordnung problemlos eingefädelt werden.

Es sei noch erwähnt, dass das beschriebene Tiefersetzen so erfolgen muss, dass ein axiales Gleiten der Leitschaufeln nach oben möglich ist. Denn wenn die untersten Leitschaufelzapfen in den unteren Leitradring komplett eingeführt sind, dann kann ein weiteres Absenken der Baugruppe nur erfolgen, wenn diese komplett eingeführten Leitschaufeln relativ zum oberen Leitradring bzw. Turbinendeckel nach oben verschiebbar sind. Nachdem die Baugruppe komplett abgesenkt worden ist, befinden sich somit alle Leitschaufeln wieder auf derselben Höhe. Diese Voraussetzung kann jedoch mit den erwähnten Spindeln problemlos bewerkstelligt werden.

Auch wenn man zugesteht, dass das Einfädeln der Baugruppe einen etwas längeren Einsatz des Krafthauskranes erfordert, wird durch das erfindungsgemäße Verfahren, die Verfügbarkeit des Krafthauskranes für andere Hebearbeiten gegenüber dem Verfahren gemäß dem Stand der Technik insgesamt erheblich erhöht und somit die Installationszeit des gesamten Kraftwerkes verkürzt.

## Patentansprüche

1. Verfahren zur Montage eines Leitapparates einer großen hydraulischen Maschine mit vertikaler Drehachse, wobei das Verfahren folgende Schritte umfasst: Zusammenbau einer Baugruppe wenigstens umfassend den oberen Leitradring bzw. den Turbinendeckel und alle Leitschaufeln des Leitapparates, wobei der Zusammenbau nicht im Maschinenschacht stattfindet und die Leitschaufeln hängend montiert werden, Einbau des unteren Leitradringes in den Maschinenschacht, Einbau der Baugruppe in den Maschinenschacht durch kontinuierliches Absenken, **dadurch gekennzeichnet, dass** die Achsen der Leitschaufeln vertikal verlaufen und das Verfahren folgende weitere Schritte umfasst: Vor dem Absenken der Baugruppe: Absenken der Leitschaufeln auf zueinander unterschiedliche Höhen innerhalb der Baugruppe so, dass die abgesenkten Leitschaufeln nach oben verschiebbar sind; während dem Absenken der Baugruppe: es werden die sich in der Baugruppe befindlichen Leitschaufeln sukzessive in die im unteren Leitradring vorgesehenen Öffnungen eingeführt.

2. Verfahren zur Montage eines Leitapparates nach Anspruch 1, **dadurch gekennzeichnet, dass** die Baugruppe auch die Regelmechanik des Leitapparates umfasst.

3. Verfahren zur Montage eines Leitapparates nach Anspruch 1 oder 2, **dadurch gekennzeichnet, dass** jeweils zwei Leitschaufeln auf die gleiche Höhe abgesenkt werden.

4. Verfahren zur Montage eines Leitapparates nach Anspruch 1 oder 2, **dadurch gekennzeichnet, dass** jeweils drei Leitschaufeln auf die gleiche Höhe abgesenkt werden.

5. Verfahren zur Montage eines Leitapparates nach Anspruch 1 oder 2, **dadurch gekennzeichnet, dass** jeweils vier Leitschaufeln auf die gleiche Höhe abgesenkt werden.

6. Verfahren zur Montage eines Leitapparates nach einem der vorangehenden Ansprüche, **dadurch gekennzeichnet, dass** die Leitschaufeln mit Hilfe von Spindeln abgesenkt werden.

## Claims

1. Method for mounting a guide apparatus of a large hydraulic machine with a vertical rotational axis, wherein the method comprises the following steps: assembling a subassembly at least comprising the upper guide wheel ring or the turbine cover and all the guide vanes of the guide apparatus, wherein the assembly does not take place in the machine shaft and the guide vanes are mounted in a suspended manner, installing the lower guide wheel ring in the machine shaft, and installing the subassembly in the machine shaft by means of continuous lowering, **characterized in that** the axes of the guide vanes extend vertically and the method comprises the following steps: before the lowering of the subassembly: lowering the guide vanes to differing heights in relation to each other inside the subassembly so that the lowered guide vanes can be displaced in the upward direction; during the lowering of the subassembly: the guide vanes which are located in the subassembly are inserted in succession into the openings which are provided in the lower guide wheel ring.

2. Method for mounting a guide apparatus according to Claim 1, **characterized in that** the subassembly also comprises the control mechanism of the guide apparatus.

3. Method for mounting a guide apparatus according to either of Claims 1 and 2, **characterized in that** two guide vanes are lowered in each case to the same height.

4. Method for mounting a guide apparatus according to either of Claims 1 and 2, **characterized in that** three guide vanes are lowered in each case to the same height.

5. Method for mounting a guide apparatus according to either of Claims 1 and 2, **characterized in that** four guide vanes are lowered in each case to the same height.

6. Method for mounting a guide apparatus according to one of the preceding claims, **characterized in that** the guide vanes are lowered with the aid of spindles.

## Revendications

1. Procédé de montage d'un appareil directeur d'une grosse machine hydraulique avec un axe de rotation vertical, le procédé comprenant les étapes suivantes : assemblage d'un module comprenant au moins l'anneau de roue directrice supérieur ou le couvercle de turbine et toutes les aubes directrices de l'appareil directeur, l'assemblage n'ayant pas lieu dans le tambour de machine et les aubes directrices étant montées en suspension, installation de l'anneau de roue directrice inférieur dans le tambour de machine, installation du module dans le tambour de machine par abaissement en continu, **caractérisé en ce que** les axes des aubes directrices s'étendent verticalement et le procédé comprend les étapes supplémentaires suivantes : avant l'abaissement du module : abaissement des aubes directrices à des hauteurs différentes les unes des autres à l'intérieur du module de telle sorte que les aubes directrices abaissées puissent être déplacées vers le haut ; pendant l'abaissement du module : les aubes directrices se trouvant dans le module sont introduites successivement dans les ouvertures prévues dans l'anneau de roue directrice inférieur.

2. Procédé de montage d'un appareil directeur selon la revendication 1, **caractérisé en ce que** le module comprend également le mécanisme de réglage de l'appareil directeur.

3. Procédé de montage d'un appareil directeur selon la revendication 1 ou 2, **caractérisé en ce qu'**à chaque fois deux aubes directrices sont abaissées à la même hauteur.

4. Procédé de montage d'un appareil directeur selon la revendication 1 ou 2, **caractérisé en ce qu'**à chaque fois trois aubes directrices sont abaissées à la même hauteur.

5. Procédé de montage d'un appareil directeur selon la revendication 1 ou 2, **caractérisé en ce qu'**à chaque fois quatre aubes directrices sont abaissées à la même hauteur.

6. Procédé de montage d'un appareil directeur selon l'une quelconque des revendications précédentes, **caractérisé en ce que** les aubes directrices sont abaissées à l'aide de broches.
